(19) Europäisches Patentamt / European Patent Office / Office européen des brevets

(11) **EP 4 503 852 A1**

(12) **EUROPEAN PATENT APPLICATION**
published in accordance with Art. 153(4) EPC

(43) Date of publication:
05.02.2025 Bulletin 2025/06

(21) Application number: 23774248.1

(22) Date of filing: 01.02.2023

(51) International Patent Classification (IPC):
*H05B 3/40* (2006.01)  *F16L 53/35* (2018.01)

(52) Cooperative Patent Classification (CPC):
H05B 3/48; F16L 53/35; H05B 3/40;
H05B 2203/003

(86) International application number:
PCT/JP2023/003166

(87) International publication number:
WO 2023/181649 (28.09.2023 Gazette 2023/39)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 24.03.2022 JP 2022048105

(71) Applicant: Tomoegawa Corporation
Tokyo 104-8335 (JP)

(72) Inventors:
• KURAHARA, Taku
Shizuoka-shi, Shizuoka 421-0192 (JP)
• SUGAWARA, Yosuke
Shizuoka-shi, Shizuoka 421-0192 (JP)
• KOKUI YAMAJI, Maika
Shizuoka-shi, Shizuoka 421-0192 (JP)
• GOTO, Makoto
Shizuoka-shi, Shizuoka 421-0192 (JP)

(74) Representative: TBK
Bavariaring 4-6
80336 München (DE)

(54) **PIPE HEATING STRUCTURE, AND PIPE HEATING STRUCTURE CONNECTING BODY**

(57) Aiming at providing a heat generation layer easily attachable or detachable to or from an outer circumferential face of a pipe, and at efficiently heating the inside of the pipe (particularly in the vicinity of a joint), disclosed herein as a solution is a pipe heating structure having a cylindrical main body; a ring-shaped joint that is attached to an end of the main body, and extends from an outer circumferential face of the main body in a direction perpendicular to an axis of the main body and away from the axis; and a sheet-like heater that is attached to the outer circumferential face of the main body, and has a first insulating layer, a heat generating layer, and a second insulating layer stacked therein in this order, the joint having no sheet-like heater on the outer circumferential face.

[FIG 1]

EP 4 503 852 A1

**Description**

TECHNICAL FIELD

This invention relates to a pipe heating structure and a coupled pipe heating structure.

BACKGROUND ART

A heater for heating pipe or the like has been known by those described for example in Patent Literatures 1 and 2.

Patent Literature 1 describes a heater structured to surround and heat a member to be heated, which has a heat element; a jacket member composed of a flexible bag, and heat-conductive material pieces having a heat conductivity at 20°C of 1.0 W/(M·K) or larger enclosed in the bag, which is structured to be flexible as a whole; and a flexible skin member, used so as to embrace the member to be heated with the jacket member, while placing the heat element outside the jacket member, and so as to wrap the whole body with the skin member. Patent Literature 1 describes that, with this heater, the jacket member can surround the member to be heated in a gapless manner, so that heat from the heat element can conduct through the jacket member to the member to be heated, thereby enabling efficient heating regardless of dimension and shape of the member to be heated.

Patent Literature 2 describes a heater that includes a heat element; a first member composed of a metal sheet, and having a pair of elongated parts arranged on both sides of a member to be heated; and a pair of second members that holds the heat element together with the first member. With such heater, the member to be heated may be uniformly heated as a whole, by arranging the metal-made first member so as to cover the member to be heated, thereby enabling heat conduction from the heat element to the first member. According to the description, this needs only a small area of heat element and a less power consumption.

CITATION LIST

PATENT LITERATURE

[Patent Literature 1] JP 2014-7111 A
[Patent Literature 2] WO 2012/090829

SUMMARY OF THE INVENTION

TECHNICAL PROBLEM

Heating of pipe with use of the heater described in Patent Literature 1, however, needs a large amount of electric power in order to heat the inside of the pipe up to a desired temperature. That is, effective heating is difficult. Heating of pipe with use of the heater described in Patent Literature 2 needs a heater shaped conforming to the pipe, making the pipe work labor-consuming.

This invention is aimed at solving the aforementioned problems. It is therefore an object of this invention to provide a pipe heating structure capable of easily attaching and detaching a heat generation layer to or from an outer circumferential face of a pipe, and, of efficiently heating the inside of the pipe (in particular, the inside of a joint); and a coupled pipe heating structure having a plurality of such structure coupled therein.

SOLUTION TO PROBLEM

Aimed at solving the aforementioned problems, the present inventors went through extensive investigations to complete this invention.

This invention encompasses items (1) to (10) below.

(1) A pipe heating structure including:

a cylindrical main body;
a ring-shaped joint that is attached to an end of the main body, and extends from an outer circumferential face of the main body in a direction perpendicular to an axis of the main body and away from the axis; and
a sheet-like heater that is attached to the outer circumferential face of the main body, and has a first insulating layer, a heat generating layer, and a second insulating layer stacked therein in this order, the joint having no sheet-like heater on the outer circumferential face.

(2) The pipe heating structure according to (1), wherein in the joint, an end face most apart from the main body is perpendicular to the axis, and an end face opposed to the end face and closer to the main body inclines 80 to 120 degrees from the axis.

(3) The pipe heating structure according to (1) or (2), wherein in a direction parallel to the axis of the main body, the joint and the heat generation layer are 3 to 8 mm apart.

(4) The pipe heating structure according to any one of (1) to (3), wherein in a direction parallel to the axis of the main body, the joint and the first insulating layer or the second insulating layer are 0 to 6 mm apart.

(5) The pipe heating structure according to any one of (1) to (4), further including a second heat generation layer that is stacked on the outer side of the second insulating layer of the sheet-like heater, within a range 3 to 53 mm apart from the joint in a direction parallel to the axis of the main body.

(6) The pipe heating structure according to any one of (1) to (5), wherein the heat generation layer is structured to have a relatively high calorific value within a range 3 to 50 mm apart from the joint in a direction parallel to the axis of the main body, by increasing resistivity of the heat generation layer within a range 3 to 50 mm apart from the joint, larger than resistivity outside of the range.

(7) The pipe heating structure according to any one of (1) to (6), further including a heat diffusion layer between the outer circumferential face of the main body and the first insulating layer.

(8) The pipe heating structure according to any one of (1) to (7), wherein the sheet-like heater has a thickness of 0.200 to 0.800 mm.

(9) A coupled pipe heating structure including two or more of the pipe heating structures according to any one of (1) to (8) coupled therein, with the individual end faces of the joints abutted.

(10) The coupled pipe heating structure according to (9), further including a clamp arranged outside the joints, the clamp having no sheet-like heater on an outer circumferential face thereof, meanwhile having the sheet-like heater on an inner circumferential face side thereof, and on the outer circumferential face of the main body.

ADVANTAGEOUS EFFECTS OF INVENTION

This invention can provide a pipe heating structure that enables easy attachment or detachment of the heat generation layer to or from the outer circumferential face of the pipe, and, efficient heating of the inside of the pipe (in particular, inside of the joint); and a coupled pipe heating structure having a plurality of such structures coupled therein.

BRIEF DESCRIPTION OF DRAWINGS

[FIG 1] FIG. 1 is a drawing (schematic side elevation) illustrating a side face of a structure of this invention.
[FIG 2] FIG. 2 is a drawing of the structure of this invention illustrated in FIG. 1, seen on a cross section taken along a plane that contains the axis ω of a main body, highlighting only a part that falls in area A surrounded by a dotted line in FIG. 1 (schematic partial cross-sectional view).
[FIG 3] FIG. 3 is another drawing of the structure of this invention illustrated in FIG. 1, seen on a cross section taken along a plane that contains the axis ω of a main body, highlighting only a part that falls in area A surrounded by a dotted line in FIG. 1 (schematic partial cross-sectional view).
[FIG 4] FIG. 4 is a front elevation (surface view) illustrating a heat generation layer 75 illustrated in FIG. 3 attached to a first insulating layer 71.
[FIG 5] FIG. 5 is a drawing (schematic side elevation) illustrating a side face of another structure of this invention.
[FIG 6] FIG. 6 is drawing of another structure of this invention illustrated in FIG. 5, seen on a cross section taken along a plane that contains the axis ω of a main body, highlighting only a part that falls in area B surrounded by a dotted line in FIG. 5 (schematic partial cross-sectional view).
[FIG 7] FIG. 7 is a drawing (schematic side elevation) illustrating a side face of a coupled structure of this invention, having two structures of this invention having the mode illustrated in FIGs. 1 and 2 coupled therein, with the individual end faces of the joints abutted, and with a clamp further attached to the outside of the joints.
[FIG 8] FIG. 8 is a drawing (schematic cross-sectional view) of the coupled structure of this invention illustrated in FIG. 7, seen on a cross section taken along a plane that contains the axis ω of a main body.

DESCRIPTION OF EMBODIMENTS

This invention will be explained.

This invention relates to a pipe heating structure that includes a cylindrical main body; a ring-shaped joint that is attached to an end of the main body, and extends from an outer circumferential face of the main body in a direction perpendicular to an axis of the main body and away from the axis; and a sheet-like heater that is attached to the outer circumferential face of the main body, and has a first insulating layer, a heat generating layer, and a second insulating layer stacked therein in this order. The joint has no sheet-like heater on the outer circumferential face.

This sort of pipe heating structure will also be referred to as "structure of this invention", hereinafter.

This invention also relates to a coupled pipe heating structure that includes two or more of the pipe heating structure of this invention coupled therein, with the individual end faces of the joints abutted (preferably further tightly contacted).

This sort of coupled pipe heating structure will also be referred to as "coupled structure of this invention", hereinafter.

<Structure of This Invention>

A structure of this invention will be explained, while referring to the attached drawings.

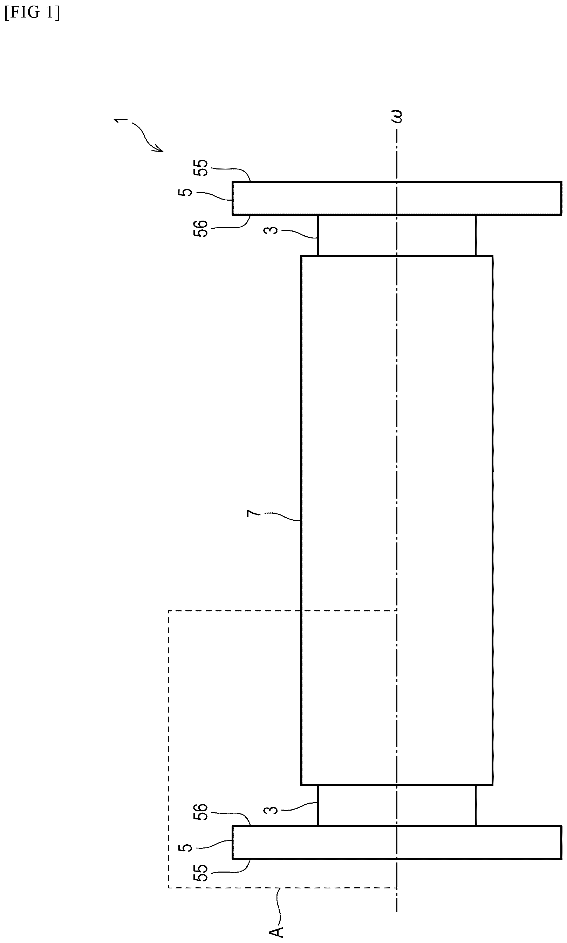

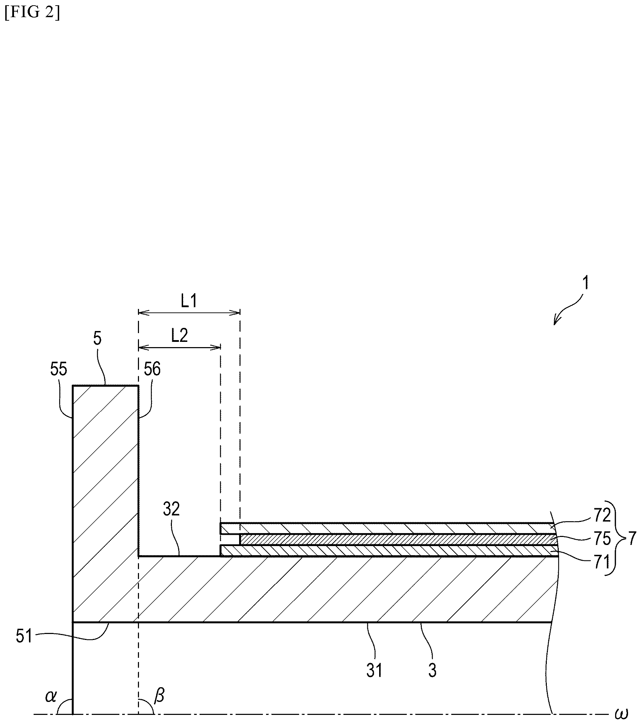

FIG. 1 is a drawing (schematic side elevation) illustrating a side face of a structure 1 of this invention, and FIG. 2 is a drawing of the structure 1 of this invention illustrated in FIG. 1, seen on a cross section taken along a plane that contains the axis $\omega$ of a main body 3, highlighting only a part that falls in area A surrounded by a dotted line in FIG. 1 (schematic partial cross-sectional view).

Note that all drawings presented below are schematic drawings or exemplification of this invention, wherein modes illustrated therein do not limit this invention.

As seen in FIGs. 1 and 2, the structure 1 of this invention has the main body 3, a joint 5, and a sheet-like heater 7.

<Main Body>

The main body 3 has a cylindrical shape, which is hollow inside, and the internal space thereof is allowed for flow or travel of fluid such as liquid or gas.

The length, cross-sectional diameter, cross-sectional shape, and material are not limited.

The main body 3 may have a length of several tens to several hundred millimeters, may have a circular as well as ring-shaped cross section, and may be formed of a steel material.

The main body 3 is exemplified by any of known plumbing or pipe.

As mentioned previously, the axis of the main body 3 is denoted by $\omega$.

<Joint>

In the structure 1 of this invention, the joint 5 is attached to the end of the main body 3.

The joint 5 is preferably attached to the end of the main body 3, so as to be integrated with the main body 3.

For example, the joint 5 may be welded to the end in the direction of the axis $\omega$ of the main body 3. The joint 5 may alternatively be formed by machining. In these cases, the main body 3 and the joint 5 are integrated.

As illustrated in FIG. 2, the joint 5 extends vertically from an outer circumferential face 32 of the main body 3, in the direction perpendicular to the axis $\omega$ of the main body 3 and away from the axis $\omega$.

Hence, the cross-sectional diameter of the main body 3 as viewed in the direction perpendicular to the axis $\omega$ (referring to FIGs. 1 and 2, twice the length in the direction perpendicular to the axis $\omega$, measured from the axis $\omega$ to the outer circumferential face 32) is smaller than the cross-sectional outer diameter of the joint 5 (referring to FIGs. 1 and 2, twice the length in the direction perpendicular to the axis $\omega$, measured from the axis $\omega$ to the outer circumferential face (a plane that connects an end face 55 and a face 56) of the joint 5). Note, in a case where the cross-sectional shape in the direction perpendicular to the axis $\omega$ of the main body 3 and/or the joint 5 is not circular, then the cross-sectional outer diameter is defined by an average value.

As a mode illustrated in FIG. 2, the joint 5 preferably has a ring shape having a through-hole at the center. Again as the mode illustrated in FIG. 2, the through-hole of the joint 5 preferably has an inner circumferential face 51 smoothly connected to an inner circumferential face 31 that forms an inner space of the main body 3.

The end face 55 of the joint 5, positioned apart from the main body 3, preferably rises perpendicularly to the axis $\omega$ as illustrated in FIGs. 1 and 2. That is, an angle between the end face 55 and the axis $\omega$, denoted by $\alpha$ in the cross-sectional view in FIG. 2, is preferably approximately 90 degrees (which means substantially 89 to 91 degrees).

The end face 55 preferably forms a flat plane, which may have formed therein a groove for accommodating an O-ring, for example.

On the other hand, the face 56 of the joint 5, which is a face opposed to the end face 55 and positioned closer to the main body 3, preferably rises at 80 to 120 degrees from the axis ω. That is, an angle between the face 56 and the axis ω, denoted by β in the cross-sectional view in FIG. 2 is preferably 80 to 120 degrees, more preferably 85 to 115 degrees, and even more preferably 90 to 110 degrees.

<Sheet-Like Heater>

The sheet-like heater 7 is attached to an outer circumferential face 32 of the main body 3, and has a first insulating layer 71, a heat generation layer 75 and a second insulating layer 72 stacked therein in this order.

The sheet-like heater 7 preferably has the first insulating layer 71, the heat generation layer 75 and the second insulating layer 72 stacked therein in this order, and preferably has no other layer among the individual layers, except for a layer composed of an adhesive for adhering the individual layers. That is, as illustrated in FIGs. 1 and 2, one main face of the first insulating layer 71 and one main face of the heat generation layer 75 are preferably contacted closely (typically with use of an adhesive), and the other face of the heat generation layer 75 and a main face of the second insulating layer 72 are preferably contacted closely (typically with use of an adhesive). Note, however, that the layer composed of an adhesive is not essential.

The first insulating layer 71 and the second insulating layer 72 will be explained.

The first insulating layer 71 and the second insulating layer 72 may be the same article, or different ones.

The first insulating layer 71 acts to electrically isolate the heat generation layer 75 and the main body 3. In a case where the sheet-like heater 7 has an additional layer (such as a heat diffusion layer described later) between the first insulating layer 71 and the outer circumferential face 32 of the main body 3, the first insulating layer 71 also acts to electrically isolate such additional layer and the heat generation layer 75.

The second insulating layer 72 acts to electrically isolating the heat generation layer 75 and the joint 5 or the main body 3. The second insulating layer 72 also acts to protect the heat generation layer 75 or to prevent electric shock. In a case where the sheet-like heater 7 further has an additional layer on the outer face (the other main face) of the second insulating layer 72, the second insulating layer 72 also acts to electrically isolate such additional layer and the heat generation layer 75.

Hence, each of the first insulating layer 71 and the second insulating layer 72 is preferably a sheet-like article composed of a highly insulating material.

Each of the first insulating layer 71 and the second insulating layer 72 preferably has heat conductivity, as well as electric insulation property.

Each of the first insulating layer 71 and the second insulating layer 72 is preferably formed, for example, of PET (polyethylene terephthalate), PI (polyimide), PP (polypropylene), PE (polyethylene), PEN (polyethylene naphthalate), TAC (triacetylcellulose), or ceramic, since these materials are highly insulating. Among them, the first insulating layer 71 and the second insulating layer 72 formed of PI (polyimide) are preferred, since they excel in heat resistance and electric insulation property.

The first insulating layer 71 and the second insulating layer 72 may alternatively formed of a high-strength-high-insulation sheet having a fluororesin impregnated into a reinforcing fiber (for example, PTFE cloth having PTFE impregnated into silica fiber).

Thickness of the first insulating layer 71 and the second insulating layer 72 is not specifically limited. The thickness of the first insulating layer 71 is preferably 50 to 700 $\mu$m, more preferably 100 to 600 $\mu$m, and even more preferably 200 to 500 $\mu$m. The thickness of the second insulating layer 72 is preferably 5 to 50 $\mu$m, and more preferably 10 to 30 $\mu$m.

Now, the thickness of each of the first insulating layer 71 and the second insulating layer 72 can be determined as follows.

An enlarged photograph (200× magnification) of a cross-section of the structure 1 of this invention, taken along a plane that contains the axis ω as illustrated in FIG. 2, is obtained, the thickness of the first insulating layer 71 is then measured on the enlarged photograph at 100 randomly-selected points, and a simple average is determined from the measured values. The thus obtained average value is defined as the thickness of the first insulating layer 71.

Also the thickness of the second insulating layer 72 will be measured and determined in the same manner.

Also note that the thickness of the heat generation layer 75 described later will be measured and determined in the same manner.

Shape and size of the first insulating layer 71 and the second insulating layer 72 are not specifically limited. Note, however, that the first insulating layer 71 plays a role of electrically isolating the heat generation layer 75 and the main body 3, so that the size of the main face of the first insulating layer 71 is usually equal to or larger than that of the main face of the heat generation layer 75. Also the size of the main face of the second insulating layer 72 is usually equal to or larger than that of the main face of the heat generation layer 75.

On the cross-section of the structure 1 of this invention, taken along a plane that contains the axis ω as illustrated in FIG. 2, a distance ($L_1$) in the direction parallel to the axis ω, which is the shortest distance between the joint 5 (more specifically, the face 56 closer to the main body 3) and the heat generation layer 75, is preferably 3 to 8 mm, and is more preferably 4 to 8 mm.

Too short distance ($L_1$) tends to make it difficult to keep good insulation between the joint 5 and the heat generation layer 75, meanwhile too long distance ($L_1$) tends to make it difficult to heat the inside of the joint 5.

On the cross-section of the structure 1 of this invention, taken along a plane that contains the axis ω as illustrated in FIG. 2, a distance ($L_2$) in the direction parallel to the axis ω, which is the shortest distance between the joint 5 (more specifically, the face 56 closer to the main body 3) and first insulating layer 71 or the second insulating layer 72, is preferably 0 to 6 mm, and is more preferably 1 to 6 mm.

This improves the workability. Meanwhile, too long distance ($L_2$) will tend to make it difficult to heat the inside of the joint 5.

The heat generation layer 75 will be explained.

The heat generation layer 75 may only be a sheet-like article that generates heat upon being energized.

The heat generation layer 75 may be formed, for example, of metal foil, sheet-like metal mesh, sheet-like metal fiber, or carbon sheet.

Material for the heat generation layer 75 is not specifically limited so far as it can generate heat upon being energized. Although stainless steel is preferred, also Cu (copper), Al (aluminum), Ni (nickel), Nichrome, or carbon is applicable.

The thickness of heat generation layer 75 is preferably 10 to 600 μm, and more preferably 20 to 150 μm. From the viewpoint of flexibility and strength, the thickness is preferably around 30 μm.

Now the thickness of the heat generation layer 75 may be measured and determined in the same manner as those of the aforementioned first insulating layer 71 and the second insulating layer 72.

Shape and size of the main face of the heat generation layer 75 may be suitably controlled according to the shape and size of the main body 3.

The heat generation layer 75 is selectable without special limitation, typically according to the size of the main body or voltage condition. In an exemplary case where the size of the first insulating layer or the second insulating layer, which is in contact with the main face of the heat generation layer 75, is 100 cm$^2$ to 2500 cm$^2$, and the voltage is conditioned at 200 V, the heat generation layer 75 preferably has a resistivity of 10 to 800 Ω, which is more preferably 80 to 200 Ω. Too low resistivity would result in overheating due to excessive output, meanwhile too low resistivity would delay the temperature elevation due to excessively poor output.

Note the resistivity of the heat generation layer herein is determined in accordance with JIS K7194.

The heat generation layer 75 is preferably composed mainly of metal fiber, and more preferably composed of metal fiber only.

Now "mainly" herein means a percentage of 70% by mass or above. That is, the metal fiber preferably accounts for 70% by mass or above of the heat generation layer 75. The percentage of the metal fiber contained in the heat generation layer 75 is preferably 80% by mass or above, more preferably 90% by mass or above, and even more preferably 95% by mass or above.

The percentage of the metal fiber contained in the heat generation layer 75 will now be determined by the method below.

A surface of the heat generation layer 75 is observed under a scanning electron microscope (SEM) at a 1000× magnification to acquire a SEM image, an area occupied by the metal fiber (excluding void) in the field of view is then determined with use of an image processor, and the obtained percentage is raised to the power of 3/2 to be converted into volume ratio, which is further multiplied by specific gravity to find mass ratio. The content ratio of the metal fiber is thus determined.

The metal fiber preferably has a cross section whose equivalent circular area diameter is 2 to 100 μm (preferably 5 to 20 μm), and a length of 2 to 20 mm.

The heat generation layer 75 is preferably constituted by a large number of such metallic fiber intricately entangled to form a sheet (metal fiber sheet). The metal fiber sheet herein may be composed solely of the metal fiber, or may alternatively contain, besides the metal fiber, any material other than the metal fiber (for example, resin fiber, etc. that can serve as a binder) so long as the heat generation will not be interfered.

Now, the metal fibers that compose the metal fiber sheet mutually contact so as to establish electrical conduction. The metal fibers are preferably connected at a contact point. For example, the metal fiber may preferably have a history of heating at high temperatures so as to be partially melted, followed by solidification, which makes the metal fibers fuse with each other at the contact point.

The metal fiber sheet is preferably a SUS fiber sheet that excels in heat resistance and chemical resistance. The SUS fiber sheet is exemplified by stainless fiber sheet (for example, Tommy Filec SS, from Tomoegawa Corporation).

The metal fiber sheet preferably has a basis weight of 25 g/m$^2$ or larger, which is more preferably 50 g/m$^2$ or larger.

The basis weight is preferably 1000 g/m² or smaller, and more preferably 200 g/m² or smaller.

Now, the basis weight herein is a value determined in accordance with JIS P8124.

The metal fiber sheet preferably has a density of 1.0 to 10.0 g/cm³, which is more preferably 1.4 to 2.0 g/cm³, and even more preferably approx. 1.7 g/cm³.

Now, the density of the metal fiber sheet is defined to be a value determined in accordance with JIS P8118 from:

$$\text{Density (g/cm}^3) = \text{Basis weight (g/m}^2)/(\text{Thickness (mm)} \times 1000).$$

The metal fiber sheet is manufacturable either by a method for manufacturing dry non-woven fabric, or by wet sheet forming. When manufacturing by the wet sheet forming, numerous metallic fibers, whose cross section has an equivalent circular area diameter of 2 to 100 $\mu$m and having a length of 2 to 20 mm, are stirred in a dispersion medium (water, organic solvent, etc.), to which an organic flocculant is added, formed into a sheet typically with use of a square sheet forming machine (typically from Toyo Seiki Seisaku-sho, Ltd.), and formed into a dry sheet having a basis weight of 50 to 1100 g/m², with use of a ferrotype drier. The dry sheet is further sintered at 400 to 1300°C, to obtain the metal fiber sheet. The metal fiber sheet preferably has no organic flocculant remained therein in principle.

The heat generation layer 75 may be uniform, or a part thereof may have a resistivity relatively larger than that in the residual part.

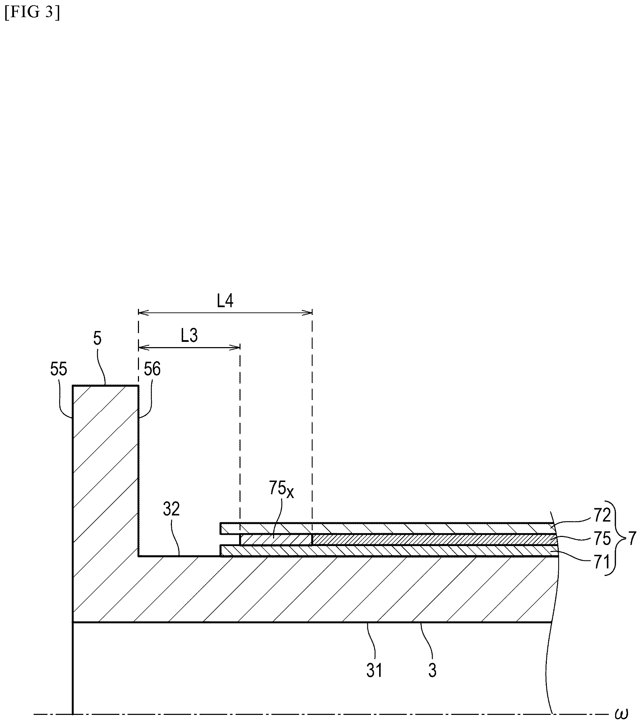

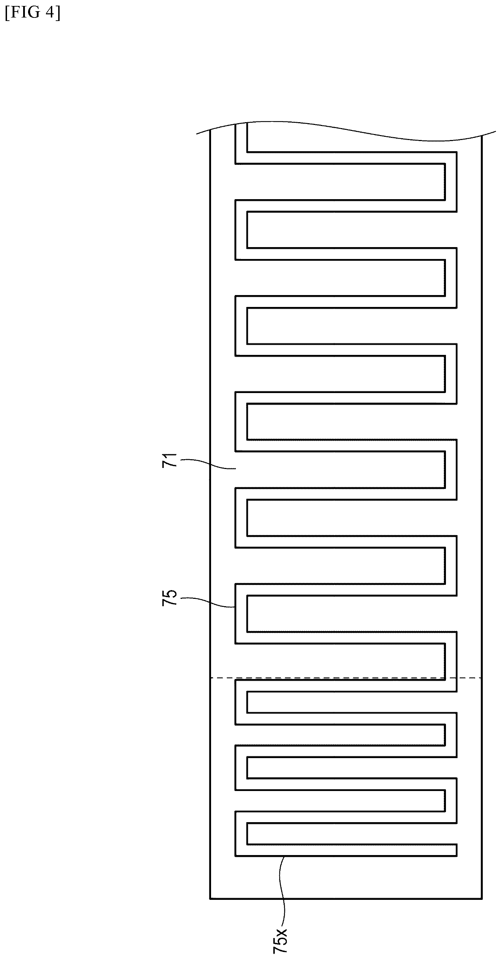

Such embodiment will be explained with reference to FIGs. 3 and 4. FIG. 3 is a drawing (schematic partial cross-sectional view) illustrating, like FIG. 2, the structure 1 of this invention illustrated in FIG. 1, seen on a cross section taken along a plane that contains the axis ω of the main body 3, highlighting only a part that falls in area A surrounded by a dotted line in FIG. 1 (schematic partial cross-sectional view). The embodiment illustrated in FIG. 3 is different from the embodiment illustrated in FIG. 2, only in the heat generation layer 75. In the embodiment illustrated in FIG. 3, the heat generation layer 75 has the resistivity higher in a part (part 75x), than in the residual part.

The FIG. 4 is a front elevation (surface view) illustrating the heat generation layer 75 illustrated in FIG. 3 attached to the first insulating layer 71. The heat generation layer 75 exemplified in FIG. 4 is patterned in a meandering band (with a constant width), whose occupied area ratio is increased in a part thereof (the part 75x out of the heat generation layer 75). Alternatively, if the strip is narrowed only in the part 75x, the occupied area ratio is reduced. In an exemplary case illustrated in FIG. 4, denoting the area size of a region of the first insulating layer 71 on which the part 75x resides as $S_{UP}$, denoting the area size of the residual part of the first insulating layer 71 as S, denoting the resistivity of the part 75x of the heat generation layer 75 as $\Omega_{UP}$, and denoting the resistivity of the residual part of the heat generation layer 75 as $\Omega$, $(\Omega_{UP}/S_{UP})/(\Omega/S)$ preferably takes a value of 1.00 to 1.70, and more preferably takes a value of 1.00 to 1.40.

In the structure 1 of this invention, when seen on a cross section taken along a plane that contains the axis ω of the main body 3 as illustrated in FIG. 3, a distance ($L_3$), which is the shortest distance in the direction parallel to the axis ω between the joint 5 (more specifically the face 56 thereof closer to the main body 3), and the part $75_X$ is preferably 3 mm or longer.

Meanwhile, a distance ($L_4$), which is the shortest distance in the direction parallel to the axis ω between the joint 5 (more specifically the face 56 thereof closer to the main body 3), and the end of the part 75x most apart from the joint 5 (more specifically the face 56 thereof closer to the main body 3) is preferably 50 mm or shorter.

With the resistivity (resistivity per unit area as explained while referring to FIG. 4) of the heat generation layer that falls within a range of 3 to 50 mm from the joint 5 (more specifically the face 56 thereof closer to the main body 3) in the direction parallel to the axis ω, thus elevated above the resistivity of the heat generation layer that falls outside the aforementioned range, the heat generation layer

(part 75x) will have a relatively large calorific value within the range 3 to 50 mm away from the joint 5 (more specifically the face 56 thereof closer to the main body 3), and can efficiently heat the inside of the joint 5, proving an advantage.

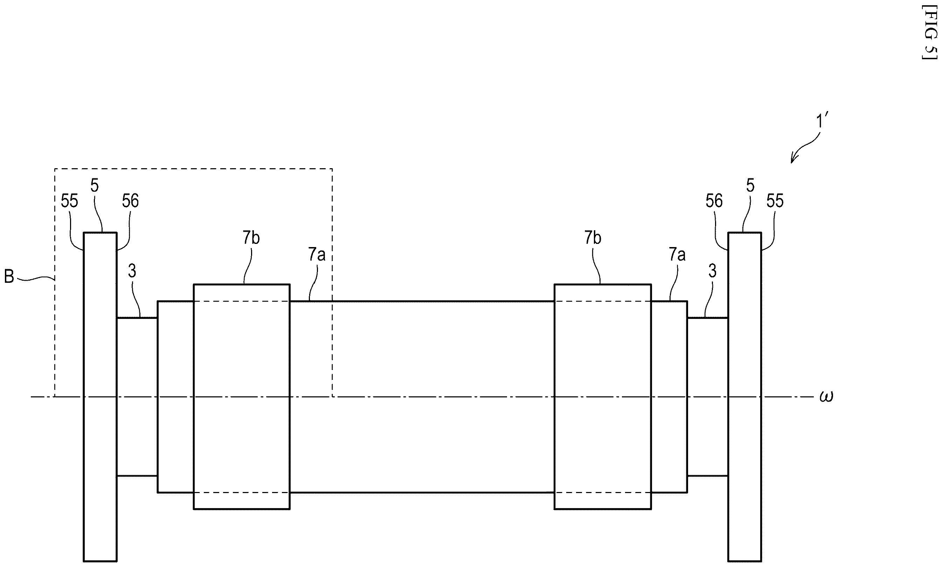

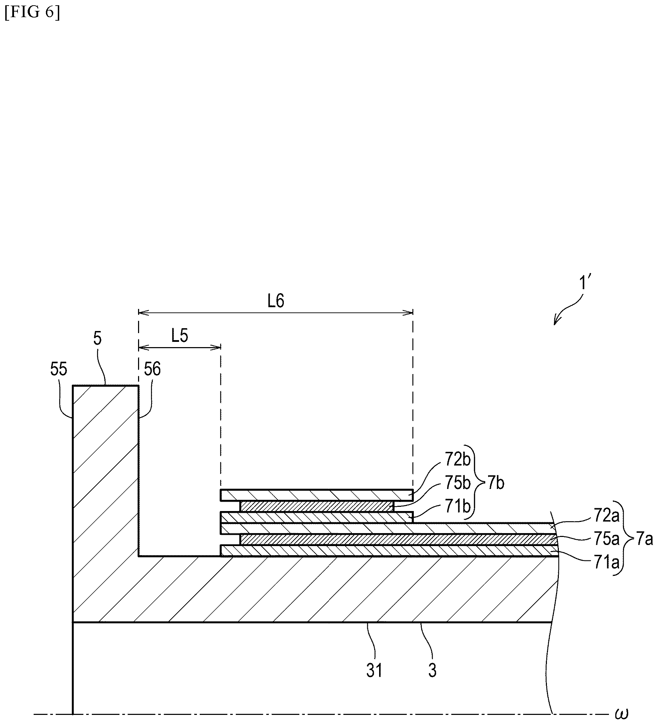

Next, a preferred embodiment of the structure of this invention (structure 1' of this invention) will be explained while referring to FIGs. 5 and 6.

FIG. 5 is a drawing (schematic side elevation) illustrating a side face of the structure 1' of this invention.

FIG. 6 is a drawing of the structure 1' of this invention illustrated in FIG. 5, seen on a cross section taken along a plane that contains the axis ω of the main body 3, highlighting only a part that falls in area B surrounded by a dotted line in FIG. 5 (schematic partial cross-sectional view).

The embodiment illustrated in FIGs. 5 and 6 has one more sheet-like heater 7b, additionally in the structure 1 of this invention according to the embodiment illustrated in FIGs. 1 and 2. That is, the structure 1' additionally has one more sheet-like heater 7b, on the outer face of a sheet-like heater 7a.

For any other aspects, the structure 1' of this invention illustrated in FIGs. 5 and 6 is same as the structure 1 of this invention illustrated in FIGs. 1 and 2.

Note that the embodiment illustrated in FIGs. 5 and 6 has two more sheet-like heater than the embodiment illustrated FIGs. 1 and 2, while leaving the number of stacking layer-wise is two in total.

The structure of this invention may alternatively be embodied similarly to as the embodiment illustrated in FIGs. 5 and 6 (structure 1' of this invention), in which the second heat generation layer is preferably stacked further on the outer face of the second insulating layer 72 of the sheet-like heater 7a in the structure 1 of this invention illustrated in FIGs. 1 and 2, and another insulating layer is preferably stacked further on the outer side of the second heat generation layer.

Such embodiment will be referred to as structure 1" of this invention.

The structure 1" of this invention is different from the structure 1' of this invention illustrated in FIGs. 5 and 6, only in that there is no first insulating layer 71b.

Note that the structure 1" of this invention corresponds to a generic concept of the structure 1' of this invention.

When seen on a cross section taken along a plane that contains the axis $\omega$ of the structure 1' of this invention as illustrated in FIG. 6, the sheet-like heater 7b, further attached as the second member to the outer face of the sheet-like heater 7a attached to the outer circumferential face of the main body 3, preferably keeps a distance ($L_5$) of 0 mm or longer, which is the shortest distance in the direction parallel to the axis $\omega$, between the joint 5 (more specifically, the face 56 closer to the main body 3) and the first insulating layer 71b and the second insulating layer 72b. The same will apply also to the aforementioned structure 1" of this invention.

Meanwhile, when seen on a cross section taken along a plane that contains the axis $\omega$ of the structure 1' of this invention as illustrated in FIG. 6, the sheet-like heater 7b, further attached as the second member to the outer face of the sheet-like heater 7a attached to the outer circumferential face of the main body 3, preferably keeps a distance ($L_6$) of 53 mm or shorter, which is the shortest distance in the direction parallel to the axis $\omega$, between the joint 5 (more specifically, the face 56 closer to the main body 3) and the ends of the first insulating layer 71b and the second insulating layer 72b most apart from the joint 5. The same will apply also to the aforementioned structure 1" of this invention.

The same will apply to the second heat generation layer 75b. That is, when seen on a cross section taken along a plane that contains the axis $\omega$ of the structure 1' of this invention as illustrated in FIG. 6, the second heat generation layer 75b, further attached to the outer face of the sheet-like heater 7a attached to the outer circumferential face of the main body 3, preferably keeps a shortest distance in the direction parallel to the axis $\omega$ of 3 mm or longer, between the joint 5 (more specifically, the face 56 closer to the main body 3) and the heat generation layer 75b. The same will apply also to the aforementioned structure 1" of this invention.

Furthermore, when seen on a cross section taken along a plane that contains the axis $\omega$ of the structure 1' of this invention as illustrated in FIG. 6, the second sheet-like heater 75b, further attached to the outer face of the sheet-like heater 7a attached to the outer circumferential face of the main body 3, preferably keeps a shortest distance in the direction parallel to the axis $\omega$ of 53 mm or shorter, between the joint 5 (more specifically, the face 56 closer to the main body 3) and the end of the heat generation layer 75b most apart from the joint 5. The same will apply also to the aforementioned structure 1" of this invention.

As seen in the above, the structure preferably has the sheet-like heater stacked in two or more layers, within a range of 0 to 53 mm (preferably 3 to 50 mm) from the joint 5 (more specifically, the face 56 closer to the main body 3) in the direction parallel to the axis $\omega$ of the main body 3. Furthermore, the structure preferably has the second heat generation layer further stacked on the outer side of the second insulating layer of the sheet-like heater, within a range of 3 to 53 mm (preferably 3 to 50 mm) from the joint (more specifically, the face 56 closer to the main body 3) in the direction parallel to the axis $\omega$ of the main body 3.

This case makes it possible to efficiently heat the inside of the joint 5, proving an advantage.

The structure 1 of this invention (including the structure 1' of this invention and the structure 1" of this invention) preferably has the aforementioned design, and additionally has a heat diffusion layer between the outer circumferential face 32 of the main body 3 and the first insulating layer 71 (71a).

With the heat diffusion layer provided thereto, the structure can diffuse heat generated by the heat generation layer, and can more uniformly heat the main body 3.

The heat diffusion layer preferably has the heat conductivity in the in-plane direction, larger than the heat conductivity in the in-plane direction of the heat generation layer, since the heat diffusing ability will further increase.

The heat conductivity of the heat diffusion layer herein is measured at normal temperature, by any of known measurement methods such as thermal diffusivity measurement based on the laser flash method (typically with use of LFA Series from NETZSCH), and thermal diffusivity measurement based on the alternating current method (typically with use of LaserPIT from Advance Riko, Inc.).

The heat diffusion layer is preferably formed of carbon; metal such as aluminum, copper, zinc, lead, gold, silver and alumina; or ceramic such as aluminum nitride.

The heat diffusion layer is preferably formed of a carbon film, for its excellent flexibility, and heat conductivity in the direction it extends.

It is also preferred that the heat diffusion layer is formed of a carbon film, and the heat generation layer is formed of a SUS fiber sheet, since the structure will be more likely to avoid influence of electrolytic corrosion that would be often observed between metals during a long-term use.

The thickness of the heat diffusion layer preferably, but not specifically limited to, 5 to 300 $\mu$m, which is more preferably 15 to 200 $\mu$m, and even more preferably approximately 100 $\mu$m.

The thickness of the heat diffusion layer herein is defined to be a value obtainable by a method similar to that used for measuring the thickness of each of the aforementioned first insulating layer 71 and the second insulating layer 72.

The sheet-like heater 7 (7a, 7b) preferably has a thickness of 0.200 to 0.800 mm, which is more preferably 0.200 to 0.300 mm.

The thickness of the sheet-like heater 7 (7a, 7b) herein is defined to be a value obtainable by a method similar to that used for measuring the thickness of each of the aforementioned first insulating layer 71 and the second insulating layer 72.

The structure 1 of this invention (including the structure 1' of this invention and the structure 1" of this invention) is constituted as described above, and has no sheet-like heater on the outer circumferential face of the joint 5 (in a case illustrated in FIGs. 1 and 2, a plane that connects the end face 55 and the face 56).

Such structure 1 of this invention (and the structure 1' of this invention) makes the heat generation layer easily attachable or detachable to or from the outer circumferential face of the pipe, and enables efficient heating of the inside of the pipe (particularly at a part near the joint).

<Coupled Structure of This Invention>

Next, a coupled structure of this invention will be explained.

The coupled structure of this invention contains two or more of the structures of this invention coupled therein, with the individual end faces of the joints abutted (and preferably tightly contacted).

The coupled structure of this invention preferably has a clamp arranged outside the joints, the clamp preferably having no sheet-like heater on an outer circumferential face thereof, meanwhile having the sheet-like heater on an inner circumferential face side of the clamp, and on the outer circumferential face of the main body.

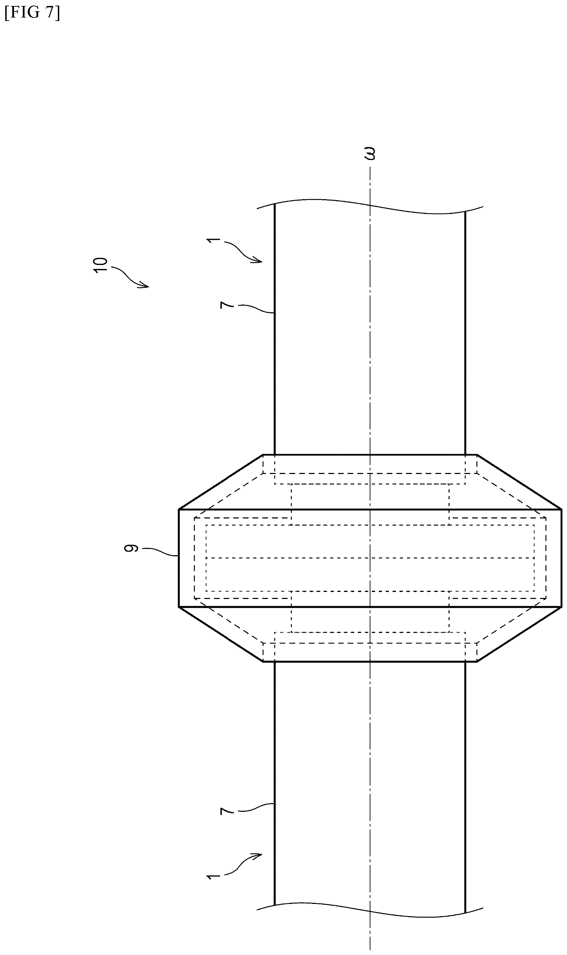

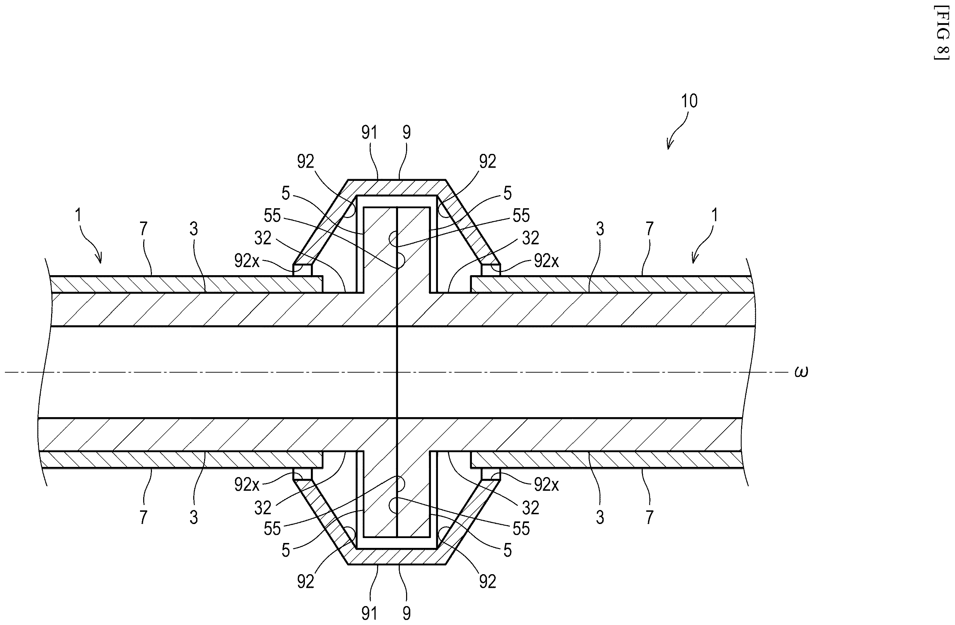

Such preferred embodiment of a coupled structure 10 of this invention will be explained with reference to FIGs. 7 and 8.

FIG. 7 is a drawing (schematic side elevation) illustrating a side face of the coupled structure 10 of this invention, having two structures 1 of this invention having the mode illustrated in FIGs. 1 and 2 coupled therein, with the individual end faces 55 of the joints 5 abutted, and with a clamp 9 further attached to the outside of the joints 5. FIG. 8 is a drawing (schematic cross-sectional view) of the coupled structure 10 of this invention illustrated in FIG. 7, seen on a cross section taken along a plane that contains the axis $\omega$ of the main body 3.

Note that the sheet-like heater 7 has the first insulating layer, the heat generation layer and the second insulating layer stacked in this order, which are however not illustrated in a discriminable manner in FIGs. 7 and 8.

The coupled structure 10 of this invention, although illustrated in FIGs. 7 and 8 as having two structures 1 of this invention coupled therein, may alternatively have three or more structures 1, 1', 1" or the like of this invention.

The coupled structure 10 of this invention has two structures 1 of this invention according to the mode illustrated in FIGs. 1 and 2, with the end faces 55 of the individual joints 5 closely contacted, wherein a method for coupling two or more structures 1, 1', 1" or the like of this invention is not specifically limited.

For example, the joints 5 are pierced in the direction parallel to the axis $\omega$ to form a through-hole that extends from one joint 5 to the other joint 5, into which a bolt is inserted and a nut is put thereon for tightening, thereby coupling the structures.

Alternatively, the end faces 55 of the individual joints 5 may be coupled for example by welding.

The clamp 9 arranged outside the joints 5 has no sheet-like heater 7 on the outer circumferential face 91 thereof.

Meanwhile, the clamp 9 preferably has the sheet-like heater 7 on the inner circumferential face 92 side thereof, and on the outer circumferential face 32 of the main body 3. As illustrated in FIG. 8, the sheet-like heater 7 preferably resides between an end 92x, which is a part of the inner circumferential face 92 of the clamp 9 positioned closest to the main body 3, and the outer circumferential face 32 of the main body 3. This is equivalent to that the clamp 9 has the sheet-like heater 7 on the inner circumferential face 92 side thereof, and on the outer circumferential face 32 of the main body 3.

With the sheet-like heater 7 thus arranged on the inner circumferential face 92 side of the clamp 9 and on the outer circumferential face 32 of the main body 3, the structure can effectively heat the inside of the pipe (particularly near the joint), proving an advantage.

Similarly to the case of the aforementioned structure 1, 1', 1" or the like of this invention, also the coupled structure of this invention, when seen on a cross section taken along a plane that contains the axis $\omega$ of the structure 1 of this invention as illustrated in FIG. 2, preferably has a distance ($L_1$) of 3 to 8 mm, which is the shortest distance in the direction parallel to the axis $\omega$ between the joint 5 (more specifically the face 56 thereof closer to the main body 3) and the heat generation layer 75. The distance ($L_1$) is more preferably 4 to 8 mm.

Similarly to the case of the aforementioned structure 1, 1', 1" or the like of this invention, also the coupled structure of this invention, when seen on a cross section taken along a plane that contains the axis $\omega$ of the structure 1 of this invention as illustrated in FIG. 2, preferably has a distance ($L_2$) of 0 to 6 mm, which is the shortest distance in the direction parallel to the axis ω between the joint 5 (more specifically the face 56 thereof closer to the main body 3), and the first insulating layer 71 and the second insulating layer 72. The distance ($L_2$) is more preferably 1 to 6 mm.

Similarly to the case of the aforementioned structure 1' of this invention, also the coupled structure of this invention preferably has the sheet-like heater stacked in two or more layers, within a range of 0 to 53 mm (preferably 3 to 50 mm) from the joint 5 (more specifically, the face 56 closer to the main body 3) in the direction parallel to the axis ω of the main body 3 as illustrated in FIG. 6.

In this case, only one sheet-like heater 7, rather than two or more sheet-like heaters, preferably resides on the inner circumferential face 92 side of the clamp 9, and on the outer circumferential face 32 of the main body 3.

Similarly to the case of the aforementioned structure 1" or the like of this invention, also the coupled structure of this invention preferably has the second heat generation layer, within a range of 3 to 53 mm (preferably 3 to 50 mm) from the joint 5 (more specifically, the face 56 closer to the main body 3) in the direction parallel to the axis ω of the main body 3.

In this case, only one sheet-like heater 7, rather than the sheet-like heater of the second heat generation layer, preferably resides on the inner circumferential face 92 side of the clamp 9, and on the outer circumferential face 32 of the main body 3.

Similarly to the case of the aforementioned structure 1 of this invention, also in the coupled structure of this invention, with the resistivity of the heat generation layer that falls within a range of 3 to 50 mm from the joint 5 (more specifically the face 56 thereof closer to the main body 3) in the direction parallel to the axis ω as illustrated in FIG. 3, elevated above the resistivity of the heat generation layer that falls outside the aforementioned range, the heat generation layer (part 75x) preferably has a relatively large calorific value within the range 3 to 50 mm away from the joint 5 (more specifically the face 56 thereof closer to the main body 3).

Similarly to the case of the aforementioned structure 1, 1', 1" or the like of this invention, also the coupled structure of this invention preferably has the heat diffusion layer, additionally between the outer circumferential face of the main body and the first insulating layer.

Similarly to the case of the aforementioned structure 1, 1', 1" or the like of this invention, also the coupled structure of this invention preferably has the sheet-like heater whose thickness is 0.200 to 0.800 mm.

This application claims priority to Japanese Patent Application No. 2022-48105 filed on March 24, 2022, the entire contents of which are incorporated by reference herein.

REFERENCE SIGNS LIST

1, 1', 1" structure of this invention
3 main body
31 inner circumferential face of main body
32 outer circumferential face of main body
5 joint
51 inner circumferential face of through-hole
55 end face of joint
56 face of joint closer to main body
7, 7a, 7b sheet-like heater
71, 71a, 71b first insulating layer
72, 72a, 72b second insulating layer
75, 75a, 75b heat generation layer
$75_X$ part of heat generation layer
9 clamp
91 outer circumferential face of clamp
92 inner circumferential face of clamp
$92_X$ end of inner circumferential face of clamp

**Claims**

1. A pipe heating structure comprising:

a cylindrical main body;
a ring-shaped joint that is attached to an end of the main body, and extends from an outer circumferential face of the main body in a direction perpendicular to an axis of the main body and away from the axis; and
a sheet-like heater that is attached to the outer circumferential face of the main body, and has a first insulating layer, a heat generating layer, and a second insulating layer stacked therein in this order,
the joint having no sheet-like heater on the outer circumferential face.

2. The pipe heating structure according to claim 1, wherein in the joint, an end face most apart from the main body is perpendicular to the axis, and an end face opposed to the end face and closer to the main body inclines 80 to 120 degrees from the axis.

3. The pipe heating structure according to claim 1 or 2, wherein in a direction parallel to the axis of the main body, the joint and the heat generation layer are 3 to 8 mm apart.

4. The pipe heating structure according to any one of claims 1 to 3, wherein in a direction parallel to the axis of the main body, the joint and the first insulating layer or the second insulating layer are 0 to 6 mm apart.

5. The pipe heating structure according to any one of claims 1 to 4, further comprising a second heat generation layer that is stacked on the outer side of the second insulating layer of the sheet-like heater, within a range 3 to 53 mm apart from the joint in a direction parallel to the axis of the main body.

6. The pipe heating structure according to any one of claims 1 to 5, wherein the heat generation layer is structured to have a relatively high calorific value within a range 3 to 50 mm apart from the joint in a direction parallel to the axis of the main body, by increasing resistivity of the heat generation layer within a range 3 to 50 mm apart from the joint, larger than resistivity outside of the range.

7. The pipe heating structure according to any one of claims 1 to 6, further comprising a heat diffusion layer between the outer circumferential face of the main body and the first insulating layer.

8. The pipe heating structure according to any one of claims 1 to 7, wherein the sheet-like heater has a thickness of 0.200 to 0.800 mm.

9. A coupled pipe heating structure comprising two or more of the pipe heating structures according to any one of claims 1 to 8 coupled therein, with the individual end faces of the joints abutted.

10. The coupled pipe heating structure according to claim 9, further comprising a clamp arranged outside the joints, the clamp having no sheet-like heater on an outer circumferential face thereof, meanwhile having the sheet-like heater on an inner circumferential face side thereof, and on the outer circumferential face of the main body.

[FIG 1]

[FIG 2]

[FIG 3]

[FIG 4]

[FIG 5]

[FIG 6]

[FIG 7]

[FIG 8]

## INTERNATIONAL SEARCH REPORT

| International application No. |
|---|
| **PCT/JP2023/003166** |

**A. CLASSIFICATION OF SUBJECT MATTER**

*H05B 3/40*(2006.01)i; *F16L 53/35*(2018.01)i
FI:   H05B3/40 A; F16L53/35

According to International Patent Classification (IPC) or to both national classification and IPC

**B. FIELDS SEARCHED**

Minimum documentation searched (classification system followed by classification symbols)

H05B3/40; F16L53/35

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2003-68430 A (MKS INSTRUMENTS, INC., HPS DIVISION) 07 March 2003 (2003-03-07) | 1-4 |
| | paragraphs [0022]-[0031], [0068]-[0069], fig. 1-3, 10, 22 | |
| Y | paragraphs [0022]-[0031], [0068]-[0069], fig. 1-3, 10, 22 | 6-10 |
| Y | US 5017760 A (GB ELECTRICAL, INC.) 21 May 1991 (1991-05-21) | 6-10 |
| | column 2, line 34 to column 3, line 14, fig. 1 | |
| Y | CN 203368786 U (WU, Rangpan) 25 December 2013 (2013-12-25) | 7-10 |
| | paragraph [0021], fig. 1 | |
| Y | WO 2011/055430 A1 (TOSHIBA MITSUBISHI-ELECTRIC INDUSTRIAL SYSTEMS CORPORATION) 12 May 2011 (2011-05-12) | 10 |
| | paragraphs [0068]-[0071], fig. 12 | |
| A | US 2008/0041841 A1 (NITTA MOORE COMPANY) 21 February 2008 (2008-02-21) | 1-10 |
| | whole documents | |
| A | JP 11-297458 A (KURARAY CO LTD) 29 October 1999 (1999-10-29) | 1-10 |
| | entire text, all drawings | |

☐ Further documents are listed in the continuation of Box C.       ☑ See patent family annex.

| | |
|---|---|
| \* Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **03 March 2023** | **20 March 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

PCT/JP2023/003166

| Patent document cited in search report | | | Publication date (day/month/year) | Patent family member(s) | Publication date (day/month/year) |
|---|---|---|---|---|---|
| JP | 2003-68430 | A | 07 March 2003 | US 5714738 A column 7, line 46 to column 11, line 29, column 22, line 57 to column 23, line 46, fig. 1-4, 10, 22 WO 1997/003540 A2 EP 838127 A1 KR 10-1999-0028880 A | |
| US | 5017760 | A | 21 May 1991 | (Family: none) | |
| CN | 203368786 | U | 25 December 2013 | (Family: none) | |
| WO | 2011/055430 | A1 | 12 May 2011 | US 2012/0175083 A1 paragraphs [0093]-[0097], fig. 12 CN 102597596 A KR 10-2012-0082002 A | |
| US | 2008/0041841 | A1 | 21 February 2008 | (Family: none) | |
| JP | 11-297458 | A | 29 October 1999 | (Family: none) | |

Form PCT/ISA/210 (patent family annex) (January 2015)

**EP 4 503 852 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014007111 A
- WO 2012090829 A
- JP 2022048105 A